# EUROPÄISCHE PATENTSCHRIFT

(11) **EP 3 485 148 B1**
(45) Veröffentlichungstag und Bekanntmachung des Hinweises auf die Patenterteilung: **11.09.2019**
(21) Anmeldenummer: 17742937.0
(22) Anmeldetag: 12.07.2017
(51) Int. Cl.: F01K 23/06, F22B 1/18

(54) **VERFAHREN ZUR ERKENNUNG EINER UNDICHTEN STELLE IN EINEM WÄRMERÜCKGEWINNUNGSSYSTEM**
METHOD FOR DETECTING AN UNSEALED LOCATION IN A HEAT RECOVERY SYSTEM
PROCÉDÉ PERMETTANT DE DÉTECTER UN DÉFAUT D'ÉTANCHÉITÉ DANS UN SYSTÈME DE RÉCUPÉRATION DE CHALEUR

(30) Priorität: 18.07.2016 AT 506402016
(43) Veröffentlichungstag der Anmeldung: 22.05.2019
(73) Patentinhaber: AVL List GmbH, 8020 Graz (AT); FPT Industrial S.p.A., 10156 Torino (IT); Iveco S.p.A., 10156 Torino (IT)
(72) Erfinder: GLENSVIG, Michael, 8010 Graz (AT); MAHLER, Susanne, 8101 Gratkorn (AT); THALER, Markus, 8020 Graz (AT)
(74) Vertreter: Babeluk, Michael
(86) Internationale Anmeldenummer: PCT/AT2017/060175
(87) Internationale Veröffentlichungsnummer: WO 2018/014058

(56) Entgegenhaltungen:
- DE-A1-102008 057 202
- DE-A1-102011 117 054
- DE-C1- 4 217 552
- US-A1- 2002 182 127

## Beschreibung

Die Erfindung betrifft ein Verfahren zur Erkennung einer undichten Stelle in einem Wärmerückgewinnungssystem einer Brennkraftmaschine eines Kraftfahrzeugs, wobei das Wärmerückgewinnungssystem zumindest ein insbesondere brennbares Arbeitsmedium und einen Arbeitsmediumkreis mit zumindest einem Verdampfer, einer Pumpe und zumindest einer Expansionsmaschine aufweist, wobei der Verdampfer vom Abgas der Brennkraftmaschine durchströmt wird. Weiters betrifft die Erfindung eine Brennkraftmaschine mit einem Wärmerückgewinnungssystem, welches zumindest ein insbesondere brennbares Arbeitsmedium und einen Arbeitsmediumkreis mit zumindest einem Verdampfer, einer Pumpe und zumindest einer Expansionsmaschine aufweist, wobei der Verdampfer stromabwärts eines SCR-Katalysators im Abgasströmungsweg der Brennkraftmaschine angeordnet ist, zur Durchführung dieses Verfahrens.

Beim Betrieb eines Systems zur Wärmerückgewinnung mit einem brennbaren Arbeitsmedium in Verbindung mit einer Brennkraftmaschine und einem Verdampfer, insbesondere einem EG-Verdampfer (EGR-Verdampfer: EGR = Exhaust Gas Recirculation) ist das Erkennen von Undichtheiten im System von hoher Priorität. Leckagen in einem Wärmerückgewinnungssystem können unter anderem zu folgenden kritischen Szenarien führen:
- Austritt des Arbeitsmediums in die Umgebung - führt zu Brandgefahr bei Verwendung eines brennbaren Arbeitsmediums wie beispielsweise Ethanol.
- Eintritt des brennbaren Arbeitsmediums in die Brennkraftmaschine - verursacht Schaden, wenn zum Beispiel das Arbeitsmedium über einen EGR-Verdampfer in den Brennraum gelangt.
- Überhitzung von Systemkomponenten durch zu geringen Füllstand des Arbeitsmediums - kann zum Beispiel zu Überhitzung des Abgasverdampfers bei zu geringem Arbeitsmedienmassenstrom führen.

Zur Feststellung einer Leckage in einem Wärmerückgewinnungssystem sind beispielsweise folgende Verfahren bekannt:
- Überwachung des Füllstandes des Arbeitsmediums im Ausgleichsbehälter mittels eines Füllstandssensors. Bei zu geringem Füllstand wird auf eine Undichtheit geschlossen.
- Dichtheitsprüfung durch unter Druck setzen des deaktivierten, kalten Systems und anschließendes Beobachten des Druckgradientens. Ein zu rascher Druckabfall deutet auf eine Undichtheit hin.
- Messen der elektrischen Leitfähigkeit der Isolierung des Wärmerückgewinnungssystems. Eine Änderung der Leitfähigkeit ist ein Anzeichen für eine Undichtheit.

Die DE 10 2011 117 054 A1 beschreibt eine Vorrichtung zur Energierückgewinnung aus einem Abwärmestrom einer Brennkraftmaschine in einem Fahrzeug mit einem Arbeitsmedium-Kreislauf, wobei zur Erkennung von Undichtheiten im Verdampfer des Arbeitsmedium-kreislaufes ein mit einer Steuereinheit gekoppelter Füllstandssensor eingesetzt wird, um den Füllstand in einem Arbeitsmediumbehälter zu überwachen.

Die US 2002/0182127 A1 offenbart eine Einrichtung zum Entfernen von bei der Verbrennung auftretenden Stickoxiden im Abgas einer Brennkraftmaschine, wobei dem Abgas ein NH₃ enthaltendes Reduktionsmittel zugeführt wird. Zum Messen der NH₃-Konzentration im Abgas wird ein NH₃-Sensor eingesetzt.

Aus der DE 10 2008 057 202 A1 ist es bekannt, die Menge eines in einem Clausius-Rankine-Kreis zirkulierenden Arbeitsfluids mithilfe einer Steuereinrichtung und eines Steuerventils einzustellen
Die DE 42 17 552 C1 offenbart einen Katalysator zur selektiven katalytischen Reduktion von Stickoxiden aus Abgasen, der zwei NH₃-Sensoren in einer Dosiereinrichtung für die überstöchiometrische Zugabe von NH₃ umfasst.

Die US 6,526,358 B1 beschreibt beispielsweise ein Verfahren zur Erkennung von Lecks und Blockaden in einem Fluidkreislauf, wobei Druck, Temperatur und Durchflussrate an verschiedenen Stellen des Kreislaufs gemessen und in Beziehung gesetzt werden.

Die JP 2010-156314 A offenbart ein Wärmerückgewinnungssystem für eine Brennkraftmaschine wobei zur Leckage-Detektion O₂-Sensoren im Kühlmittelkreis des Wärmerückgewinnungssystems angeordnet sind.

Bekannte Verfahren haben den Nachteil, dass sie entweder nur im deaktivierten Zustand des Fahrzeuges durchgeführt werden können und/oder dass Einrichtungen wie zusätzliche Sensoren erforderlich sind.

Aufgabe der Erfindung ist es, auf möglichst einfache Weise Undichtheiten im Verdampfer eines Wärmerückgewinnungssystems frühzeitig und zuverlässig erkennen zu können. Erfindungsgemäß wird diese Aufgabe durch das Verfahren des Anspruchs 1 und die entsprechende Vorrichtung des Anspruchs 8 gelöst.

Erfindungsgemäß erfolgt dies dadurch, dass zumindest ein NH₃-Sensor im Abgasströmungsweg stromabwärts des Verdampfers angeordnet wird und mit diesem NH₃-Sensor das Abgas - vorzugsweise im Normalbetrieb der Brennkraftmaschine - gemessen wird, wobei bei Auftreten zumindest eines abnormal hohen NH₃-Messwertes - vorzugsweise nach Durchführen einer Plausibilitätsprüfung - auf eine Undichtheit des Verdampfers geschlossen wird, wobei als Arbeitsmedium eine chemische Substanz gewählt wird oder dem Arbeitsmedium eine chemische Substanz beigesetzt wird, auf welche der NH₃-Sensor reagiert. Der bei einem SCR-Katalysator ohnehin standardmäßig vorgesehene NH₃-Sensor wird also an einer Stelle im Abgasströmungsweg platziert, welche stromabwärts einer möglicherweise auftretenden Leckage des Verdampfers des Wärmerückgewinnungssystems liegt. Unter Leckage ist eine Undichtheit zu verstehen, wobei das Arbeitsmedium unkontrolliert aus dem Verdampfer entweicht.

Voraussetzung für eine Aussage über die Dichtheit des Wärmerückgewinnungssystems ist, dass der NH₃-Sensor auf ein aus dem Verdampfer austretendes Arbeitsmedium anspricht. Um dies zu erreichen wird als Arbeitsmedium eine chemische Substanz gewählt oder es wird dem Arbeitsmedium eine chemische Substanz beigesetzt, auf welche der NH₃-Sensor reagiert, wobei vorzugsweise der NH₃-Sensor in Bezug auf diese Substanz eine Querempfindlichkeit aufweist. Unter Querempfindlichkeit wird im Allgemeinen die Empfindlichkeit eines Sensors auf andere Größen als die zu messende Größe verstanden, wodurch es zu Verfälschungen im Messergebnis kommen kann. Im vorliegenden Fall bedeutet Querempfindlichkeit des NH₃-Sensors, dass dieser eine Empfindlichkeit auf andere chemische Substanzen als Ammoniak aufweist. Es ist beispielsweise bekannt, dass NH₃-Sensoren eine Querempfindlichkeit in Bezug auf NOₓ, insbesondere NO₂ aufweisen.

Überraschenderweise hat sich gezeigt, dass NH₃-Sensoren auch eine deutliche Querempfindlichkeit gegenüber weiteren chemischen Stoffen wie etwa Ethanol aufweist, welches üblicherweise als Arbeitsmedium Verwendung findet. Die vorliegende Erfindung macht sich in einer bevorzugten Ausführungsvariante der Erfindung die Tatsache zunutze, dass NH₃-Sensoren nicht nur auf Ammoniak, sondern auch zum Beispiel auf Ethanol reagieren. Somit kann auf eine Leckage des Wärmerückgewinnungssystems geschlossen werden, wenn ein abnormal hoher NH₃-Messwert festgestellt wird. Abnormal bedeutet in diesem Zusammenhang, dass der festgestellte NH₃-Messwert höher ist, als ein dem momentanen Betriebspunkt entsprechender Wert erlauben würde. Um dies zu verifizieren oder falsifizieren, wird vorteilhafterweise in Bezug auf den festgestellten NH₃-Messwert eine Plausibilitätsprüfung durchgeführt. Ist der Verdampfer stromabwärts eines SCR-Katalysators angeordnet, so beinhaltet die Plausibilitätsprüfung, ob der erhöhte NH₃-Messwert der Einspritzung eines NH₃-hältigen Additives geschuldet werden kann.

Ein SCR-Katalysator (SCR=Selective Catalytic Reduction) im Abgasstrang einer Brennkraftmaschine dient der Reduktion von bei der Verbrennung auftretenden Stickoxiden. Für die Reaktion wird beispielsweise NH₃ benötigt, welches dem Abgas stromaufwärts des SCR-Katalysators in Form einer wässrigen Harnstofflösung beigemischt wird. Die Produkte der Reaktion sind H₂O (Wasser) und N₂ (Stickstoff). Zur Regelung der exakten Dosierung der Harnstofflösung ist üblicherweise stromabwärts des SCR-Katalysators im Abgasstrang zumindest ein NH₃-Sensor verbaut. Im Rahmen der vorliegenden Erfindung ist dieser NH₃-Sensor nicht - wie üblich - unmittelbar nach dem SCR-Katalysator oder einem dem SCR-Katalysator eventuell nachgeschalteten Ammoniak-Sperrkatalysator (ASC), sondern erst stromabwärts eines nach dem SCR-Katalysator bzw. Ammoniak-Sperrkatalysator angeordneten Verdampfers des Abwärmerückgewinnungssystems angeordnet. Der Sperrkatalysator dient dazu um gegebenenfalls überschüssiges NH₃ stromabwärts des SCR-Speicherkatalysators 8 zu vermindern bzw. zu entfernen, wobei Ammoniak zu N₂ und H₂O oxidiert wird.

Um Einflüsse der Abgasnachbehandlung auf den erhöhten NH₃-Messwert ausschließen zu können, ist gemäß einer vorteilhaften Ausführungsvariante vorgesehen, dass im normalen Motorbetrieb der Brennkraftmaschine, bei Auftreten eines abnormal hohen Messwertes eine Plausibilitätsprüfung durchgeführt wird, indem die Einspritzmenge eines NH₃-hältigen Additives stromaufwärts des SCR-Speicherkatalysators - vorzugsweise unter Verwendung eines geschlossenen Regelkreises - reduziert oder gestoppt wird, und untersucht wird, ob nach Ablauf einer definierten ersten Wartezeit eine wesentliche Verminderung der gemessenen NH₃-Konzentration eintritt, und falls weiterhin ein abnormal hoher NH₃-Messwert festgestellt wird, auf eine Undichtheit des Verdampfers geschlossen wird.

Alternativ oder zusätzlich zur Leckage Untersuchung m Motorbetrieb kann auch gemäß einer vorteilhaften Ausführung der Erfindung vorgesehen sein, dass im Schubbetrieb der Brennkraftmaschine die Einspritzung eines NH₃-hältigen Additives stromaufwärts des SCR-Speicherkatalysators reduziert oder gestoppt wird, und untersucht wird, ob nach Ablauf einer definierten zweiten Wartezeit eine wesentliche Verminderung der gemessenen NH₃-Konzentration eintritt, und falls weiterhin ein abnormal hoher NH₃-Messwert festgestellt wird, auf eine Undichtheit des Verdampfers geschlossen wird.

Die erste und/oder zweite Wartezeit sollte beispielsweise zumindest 30 bis 60 Sekunden betragen, damit sich ein Reaktionsgleichgewichtszustand einstellen kann.

Alternativ oder zusätzlich zu einem Verdampfer im Abgasstrang stromabwärts des SCR-Katalysators kann in einer Abgasrückführleitung ein (weiterer) Verdampfer des Abwärmerückgewinnungssystems angeordnet sein. In diesem Fall können in den meisten Fällen bei Feststellen eines abnormal erhöhten NH₃-Messertes andere Ursachen als eine Leckage des Verdampfers ausgeschlossen werden.

Die Feststellung einer Leckage des zweiten Verdampfers kann - beispielsweise im Schubbetrieb - ebenfalls durch den stromabwärts des ersten Verdampfers angeordneten ersten NH₃-Sensor im Abgasstrang erfolgen, vorausgesetzt, dass das an der Leckagestelle des zweiten Verdampfers austretende Arbeitsmedium des Arbeitsmediumkreises nicht innerhalb der Brennräume oder im Abgasnachbehandlungssystem eine chemische Reaktion eingeht, dessen Endprodukt durch den NH₃-Sensor nicht mehr erfasst werden kann. Um dieses Risiko auszuschließen, kann in Weiterführung der Erfindung vorgesehen sein, dass ein zweiter NH₃-Sensor stromabwärts des zweiten Verdampfers in der Abgasrückführleitung angeordnet ist, über welchen Leckagen des zweiten Verdampfers direkt festgestellt werden können.

Ein abnormal hoher NH₃-Messwert liegt beispielsweise dann vor, wenn der durchschnittliche NH₃-Messwert über 10 ppm liegt.

Wenn unzweifelhaft eine Undichtheit des Verdampfers festgestellt wird, kann ein entsprechendes Warnsignal an den Fahrer ausgegeben und/oder ein entsprechender Eintrag im Fehlercode im On-Board-Diagnosesystem eingetragen werden.

Die Erfindung wird im Folgenden anhand eines in den Figuren gezeigten nicht einschränkenden Ausführungsbeispiels näher erläutert. Darin zeigen:
- Fig. 1a: schematisch eine erfindungsgemäße Brennkraftmaschine in einer ersten Ausführungsvariante;
- Fig. 1b: schematisch eine erfindungsgemäße Brennkraftmaschine in einer zweiten Ausführungsvariante;
- Fig. 2: und Fig. 3 einen zeitlichen Verlauf der Last und der NH₃-Messwerte für ein leckagefreies Wärmerückgewinnungssystem; und
- Fig. 4: und Fig. 5 einen zeitlichen Verlauf der Last und der NH₃-Messwerte für ein leckagebehaftetes Wärmerückgewinnungssystem, bei Anwendung der vorliegenden Erfindung.

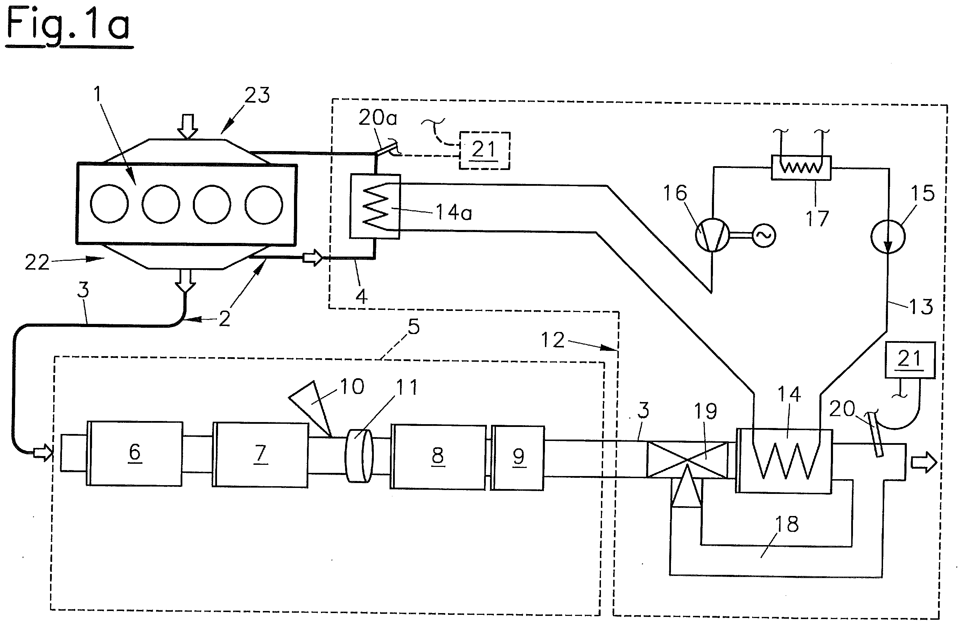

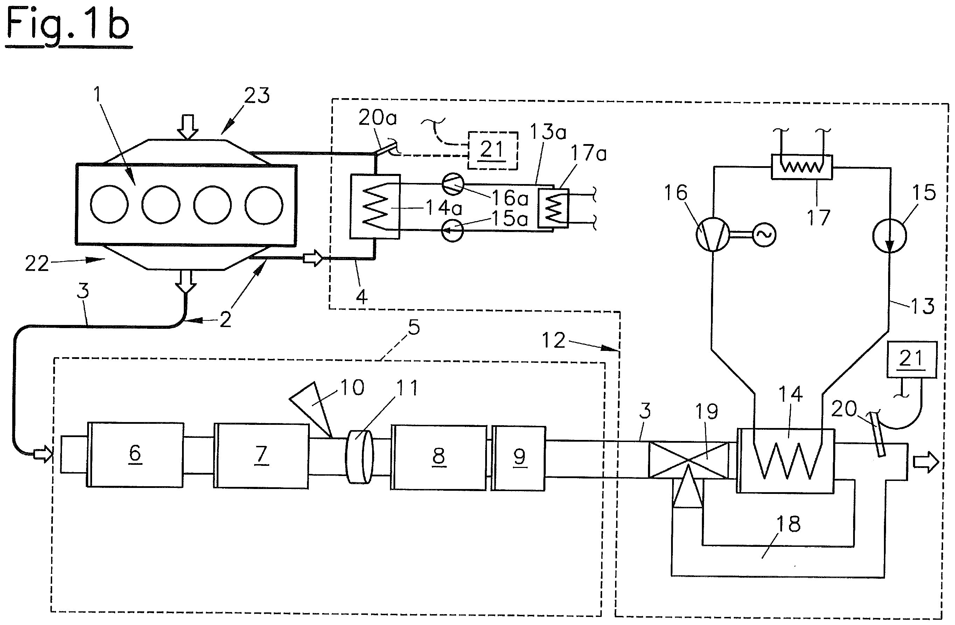

Die Fig. 1a und Fig. 1b zeigen jeweils eine Brennkraftmaschine 1 mit Abgasströmungswegen 2, welche durch einen Abgasstrang 3 und eine Abgasrückführleitung 4 gebildet sind. Die Abgasrückführleitung 4 dient zur externen Abgasrückführung zwischen Auslasssystem 22 und Einlasssystem 23 der Brennkraftmaschine 1.

Im Abgasstrang 3 ist eine Abgasnachbehandlungseinrichtung 5 angeordnet, welches im Ausführungsbeispiel einen Diesel-Oxidationskatalysator 6, einen Diesel-Partikelfilter 7, einen SCR-Katalysator 8 und einen Sperrkatalysator 9 aufweist. Stromaufwärts des SCR-Katalysators 8 kann ein NH₃-hältiges Additiv über eine Einspritzeinrichtung 10 zugeführt werden. Ein Mischer 11 dient zum Mischen und Verdampfen des eingespritzten Additivs im Abgasstrom.

Zur Rückgewinnung der Abgasabwärme ist ein Wärmerückgewinnungssystem 12 mit einem geschlossenen Arbeitsmediumkreis 13 für ein Arbeitsmedium, beispielsweise Ethanol, vorgesehen, welches zumindest einen ersten Verdampfer 14, eine Pumpe 15 und zumindest eine Expansionsmaschine 16 aufweist. Mit Bezugszeichen 17 ist ein Kondensator bezeichnet. Zur abgasseitigen Umgehung des ersten Verdampfers 14 ist eine Umgehungsleitung 18 vorgesehen, welche stromaufwärts des ersten Verdampfers 14 vom Abgasstrang 3 abzweigt und stromabwärts des ersten Verdampfers 14 wieder in den Abgasstrang 3 einmündet. Mit Bezugszeichen 19 ist ein beispielsweise durch eine Umschaltklappe gebildetes Steuerorgan zum Umschalten der Abgasströmung zwischen den Strömungsweg durch den ersten Verdampfer 14 und die Umgehungsleitung 18 bezeichnet.

Optional kann ein zweiter Verdampfer 14a in der Abgasrückführleitung 4 vorgesehen sein, welcher stromaufwärts oder stromabwärts des ersten Verdampfers 14 in den Arbeitsmediumkreis 13 des Wärmerückgewinnungssystems 12 eingebunden sein kann. Bei der in Fig. 1a dargestellten ersten Ausführungsvariante ist der zweite Verdampfer 14a stromabwärts des ersten Verdampfers 14 in den Arbeitsmediumkreis 13 eingebunden. Alternativ dazu kann der zweite Verdampfer 14a aber auch in einen eine zweite Pumpe 15a, eine zweite Expansionsmaschine 16a und einen zweiten Kondensor 17a aufweisenden zweiten Arbeitsmediumkreis 13a des Wärmerückgewinnungssystems 12 angeordnet sein, wie in Fig. 1b gezeigt ist.

Stromabwärts des ersten Verdampfers 14 ist im Abgasstrang 3 ein NH₃-Sensor 20 angeordnet. Ein weiterer NH₃-Sensor 20a kann stromabwärts des zweiten Verdampfers 20a in der Abgasrückführleitung 4 angeordnet sein. Die NH₃-Sensoren 20, 20a stehen mit einer Steuer- und/oder Auswerteeinheit 21 in Verbindung.

Die NH₃-Sensoren 20, 20a weisen jeweils eine Querempfindlichkeit zu dem Arbeitsmedium - im vorliegenden Fall also zu Ethanol -, bzw. zu einer Komponente des Arbeitsmediums auf. Dies bedeutet, dass die NH₃-Sensoren nicht nur NH₃-Messwerte durch tatsächlich im Abgas enthaltenen Ammoniak, sondern auch durch die die Querempfindlichkeit initiierende Substanz erfassen. Kommt es zu einer Leckage im Bereich des Verdampfers 14 bzw. 14a, so schlägt sich dies also in den ausgegebenen erhöhten NH₃-Messwerten der NH₃-Sensoren 20 bzw. 20a nieder.

Bei Auftreten eines abnormal hohen NH₃-Messwertes des ersten NH₃-Sensors 20 während des normalen Motorbetriebes der Brennkraftmaschine 1 wird dieser NH₃-Messwert einer Plausibilitätsprüfung unterzogen, indem die Einspritzmenge des NH₃-hältigen Additives durch die Einspritzeinrichtung 10 stromaufwärts des SCR-Speicherkatalysators 8 beispielsweise unter Verwendung eines geschlossenen Regelkreises - reduziert oder gestoppt wird, und untersucht wird, ob nach Ablauf einer definierten ersten Wartezeit (zum Beispiel 30 bis 60 Sekunden) eine wesentliche Verminderung der gemessenen NH₃-Konzentration eintritt. Wenn weiterhin ein abnormal hoher NH₃-Messwert festgestellt wird, kann auf eine Undichtheit am ersten Verdampfer 14 geschlossen werden.

Alternativ zum Motorbetrieb kann das erfindungsgemäße Verfahren zum Erkennen einer undichten Stelle im Wärmerückgewinnungssystem 12 auch während des Schubbetriebes bzw. beim Umschalten vom Motorbetrieb auf Schubbetrieb durchgeführt werden. Dabei wird im Schubbetrieb der Brennkraftmaschine 1 die Einspritzung eines NH₃-hältigen Additives stromaufwärts des SCR-Speicherkatalysators 8 gestoppt und untersucht, ob nach Ablauf einer definierten zweiten Wartezeit von beispielsweise 30 bis 60 Sekunden eine wesentliche Verminderung der gemessenen NH₃-Konzentration eintritt. Wenn keine wesentliche Verminderung des NH₃-Messwertes festzustellen ist, kann auf eine Undichtheit am ersten 14 geschlossen werden. Kann nicht ausgeschlossen werden, dass ein aus dem zweiten Verdampfer 14a eventuell austretendes Arbeitsmedium in der Brennkraftmaschine 1 oder im Abgasnachbehandlungssystem 5 eliminiert oder chemisch verändert wird, so ist es vorteilhaft, einen zweiten NH₃-Sensor 20a unmittelbar stromabwärts des zweiten Verdampfers 14a in der Abgasrückführleitung 4 einzusetzen, über welchen Leckagen des zweiten Verdampfers 14a direkt erfasst werden können.

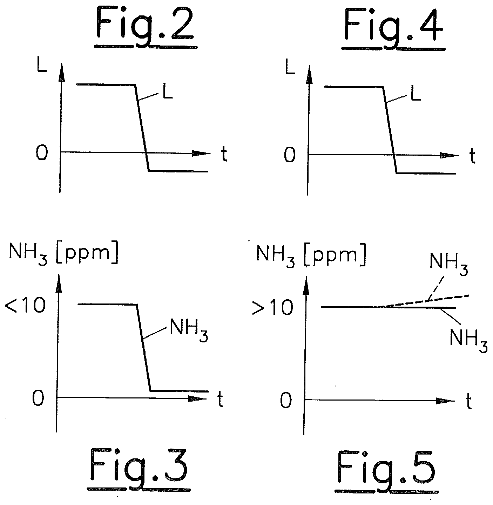

Die Fig. 2 und Fig. 3 zeigen einen zeitlichen Verlauf der Last L und der NH₃-Messwerte für ein leckagefreies Wärmerückgewinnungssystem 12 während einer Umschaltung der Brennkraftmaschine 1 auf Schubbetrieb. Üblicherweise wird während des Schubbetriebs die Einspritzung des NH₃-Additivs gestoppt. Deutlich ist erkennbar, dass der gemessene NH₃-Messwert des ersten NH₃-Sensors 20 sich drastisch vermindert - es liegt somit keine Leckage vor.

Die Fig. 4 und Fig. 5 zeigen dagegen eine Umschaltung auf Schubbetrieb, wenn eine Leckage im ersten Verdampfer 14 vorliegt. In diesem Fall kommt es zu keiner Verminderung des NH₃-Messwertes. Im Gegenteil - auf Grund der unveränderten Leckage und des geringeren Gasdurchsatzes durch den Abgasströmungsweg im Schubbetrieb kann es sogar noch zu einer Steigerung des NH₃-Messwertes kommen, wie die strichlierte Linie zeigt. In diesem Fall kann eindeutig auf eine Leckage des Verdampfers 14 geschlossen und eine entsprechende Leckagewarnung an den Fahrer ausgegeben werden.

Der Hauptvorteil der vorliegenden Erfindung ist darin zu sehen, dass keine zusätzlichen aufwändigen Leckagedetektoren verbaut werden müssen. Im Idealfall kann ein bereits serienmäßig im Abgasstrang angeordneter NH₃-Sensor 14 - allerdings an einer Stelle stromabwärts des Verdampfers im Abgasströmungsweg 2 - verwendet werden, um zuverlässige Leckageuntersuchungen durchzuführen.

## Patentansprüche

1. Verfahren zur Erkennung einer undichten Stelle in einem Wärmerückgewinnungssystem (12) einer Brennkraftmaschine (1) eines Kraftfahrzeugs, wobei das Wärmerückgewinnungssystem (12; 12a) zumindest ein insbesondere brennbares Arbeitsmedium und einen Arbeitsmediumkreis (13; 13a) mit zumindest einem Verdampfer (14; 14a), einer Pumpe (15; 15a) und zumindest einer Expansionsmaschine (16; 16a) aufweist, wobei der Verdampfer (14;14a) vom Abgas der Brennkraftmaschine (1) durchströmt wird, **dadurch gekennzeichnet, dass** zumindest ein NH₃-Sensor (20; 20a) im Abgasströmungsweg (2) stromabwärts des Verdampfers (14; 14a) angeordnet wird und mit diesem NH₃-Sensor (20; 20a) das Abgas im Abgasströmungsweg (2) gemessen wird, wobei beim Auftreten zumindest eines abnormal hohen NH₃-Messwertes - vorzugsweise nach Durchführen einer Plausibilitätsprüfung - auf eine Undichtheit des Verdampfers (14; 14a) geschlossen wird, wobei als Arbeitsmedium eine chemische Substanz gewählt wird oder dem Arbeitsmedium eine chemische Substanz beigesetzt wird, auf welche der NH₃-Sensor (20; 20a) reagiert.

2. Verfahren nach Anspruch 1, **dadurch gekennzeichnet, dass** der NH₃-Sensor (20; 20a) zur chemischen Substanz eine Querempfindlichkeit aufweist.

3. Verfahren nach Anspruch 1 oder 2, **dadurch gekennzeichnet, dass** im Motorbetrieb der Brennkraftmaschine (1) bei Auftreten eines abnormal hohen NH₃-Messwertes eine Plausibilitätsprüfung durchgeführt wird, indem die Einspritzmenge eines NH₃-hältigen Additives stromaufwärts des SCR-Speicherkatalysators (8) - vorzugsweise unter Verwendung eines geschlossenen Regelkreises - reduziert oder gestoppt wird, und untersucht wird, ob nach Ablauf einer definierten ersten Wartezeit eine wesentliche Verminderung der gemessenen NH₃-Konzentration eintritt, und falls weiterhin ein abnormal hoher NH₃-Messwert festgestellt wird, auf eine Undichtheit des Verdampfers (14) geschlossen wird.

4. Verfahren nach einem der Ansprüche 1 bis 3, **dadurch gekennzeichnet, dass** im Schubbetrieb der Brennkraftmaschine (1) die Einspritzung eines NH₃-hältigen Additives stromaufwärts des SCR-Speicherkatalysators (8) reduziert oder gestoppt wird, und untersucht wird, ob nach Ablauf einer definierten zweiten Wartezeit eine wesentliche Verminderung der gemessenen NH₃-Konzentration eintritt, und - falls weiterhin ein abnormal hoher NH₃-Messwert festgestellt wird - auf eine Undichtheit des Verdampfers (14) geschlossen wird.

5. Verfahren nach einem der Ansprüche 1 bis 4, **dadurch gekennzeichnet, dass** ein abnormal hoher NH₃-Messwert festgestellt wird, wenn der durchschnittliche NH₃-Messwert über 10 ppm liegt.

6. Verfahren nach einem der Ansprüche 1 bis 5, **dadurch gekennzeichnet, dass** die erste und/oder zweite Wartezeit zumindest 30 bis 60 Sekunden beträgt.

7. Verfahren nach einem der Ansprüche 1 bis 6, **dadurch gekennzeichnet, dass** - wenn eine Undichtheit des Verdampfers (14; 14a) festgestellt wird - ein entsprechendes Warnsignal ausgegeben wird.

8. Brennkraftmaschine, mit einem Wärmerückgewinnungssystem (12), welches zumindest ein insbesondere brennbares Arbeitsmedium und einen Arbeitsmediumkreis (13) mit zumindest einem Verdampfer (14; 14a), einer Pumpe (15) und zumindest einer Expansionsmaschine (16) aufweist, wobei der Verdampfer (14; 14a) in einem Abgasströmungsweg (2) der Brennkraftmaschine (1) angeordnet ist, zur Durchführung des Verfahrens nach einem der Ansprüche 1 bis 7, **dadurch gekennzeichnet, dass** zumindest ein NH₃-Sensor (20; 20a) stromabwärts zumindest eines im Abgasströmungsweg (2) angeordneten Verdampfers (14; 14a) angeordnet ist und mit diesem NH₃-Sensor (20; 20a) das Abgas im Abgasströmungsweg (2) der Brennkraftmaschine (1) messbar ist, wobei der NH₃ Sensor (20; 20a) mit einer elektronischen Steuer- und/oder Auswerteeinheit (21) verbunden ist.

9. Brennkraftmaschine (1) nach Anspruch 8, **dadurch gekennzeichnet, dass** ein erster Verdampfer (14) in einem den Abgasströmungsweg (2) bildenden Abgasstrang (3) der Brennkraftmaschine (1) stromabwärts eines SCR-Katalysators (8) angeordnet ist, wobei ein erster NH₃-Sensor (20) stromabwärts des ersten Verdampfers (14) im Abgasstrang (3) angeordnet ist, und wobei vorzugsweise zwischen dem SCR-Katalysator (8) und dem ersten Verdampfer (14) ein Sperrkatalysator (9) für NH₃ angeordnet ist.

10. Brennkraftmaschine (1) nach Anspruch 9, **dadurch gekennzeichnet, dass** der erste Verdampfer (14) durch eine Umgehungsleitung (18) umgehbar ist, welche stromaufwärts des ersten Verdampfers (14) vom Abgasstrang (3) abzweigt und stromabwärts des ersten Verdampfers (14) wieder in den Abgasstrang (3) einmündet, wobei vorzugsweise der erste NH₃-Sensor (20) stromabwärts der Mündung der Umgehungsleitung (18) in den Abgasstrang (3) angeordnet ist.

11. Brennkraftmaschine (1) nach einem der Anspruch 8 bis 10, **dadurch gekennzeichnet, dass** ein zweiter Verdampfer (14a) in einer den Abgasströmungsweg (2) bildenden Abgasrückführleitung (4) der Brennkraftmaschine (1) angeordnet ist, wobei vorzugsweise ein zweiter NH₃-Sensor (20a) stromabwärts des zweiten Verdampfers (14a) in der Abgasrückführleitung (4) angeordnet ist.

## Claims

1. A method for detecting a leaking point in a heat recovery system (12) of an internal combustion engine (1) of a motor vehicle, wherein the heat recovery system (12; 12a) comprises at least one particularly combustible working medium and a working medium circuit (13; 13a) having at least one evaporator (14; 14a), a pump (15; 15a) and at least one expansion machine (16; 16a), wherein the exhaust gas of the internal combustion engine (1) flows through the evaporator (14; 14a), **characterised in that** at least one NH₃ sensor (20; 20a) is arranged downstream of the evaporator (14; 14a) in the exhaust gas flow path (2), and the exhaust gas in the exhaust gas flow path (2) is measured by said NH₃ sensor (20; 20a), wherein after the occurrence of at least one abnormally high NH₃ measured value, preferably after carrying out a plausibility check, a conclusion is drawn on a leakage of the evaporator (14; 14a), wherein a chemical substance, which is selected as a working medium or which is added to the working medium, reacts to the NH3 sensor (20; 20a).

2. A method according to claim 1, **characterised in that** the NH₃ sensor (20; 20a) has a cross-sensitivity to the chemical substance.

3. A method according to claim 1 or 2, **characterised in that** a plausibility check is carried out in the engine operation of the internal combustion engine (1) when an abnormally high NH₃ measured value is detected, **in that** the injection quantity of an NH₃-containing additive is reduced or stopped upstream of the SCR storage catalytic converter (8), preferably by using a closed control loop, and checking whether after the expiration of a defined first waiting time, a substantial reduction in the measured NH₃ concentration occurs, and if an abnormally high NH₃ measured value is still detected, a conclusion is drawn on a leakage of the evaporator (14).

4. A method according to one of claims 1 to 3, **characterised in that** the injection of an NH₃-containing additive upstream of the SCR storage catalytic converter (8) is reduced or stopped during the motor-braking operation of the internal combustion engine (1), and it is examined whether, after the expiration of a defined second waiting period, a substantial reduction in the measured NH₃ concentration occurs, and if an abnormally high NH₃ measured value is still detected, a conclusion is drawn on a leakage of the evaporator (14).

5. Method according to one of claims 1 to 4, **characterised in that** an abnormally high NH₃ measured value is determined when the average NH₃ measured value is above 10 ppm.

6. A method according to one of claims 1 to 5, **characterised in that** the first and/or second waiting time is at least 30 to 60 seconds.

7. A method according to one of claims 1 to 6, **characterised in that** a corresponding warning signal is output when a leakage of the evaporator (14; 14a) is detected.

8. An internal combustion engine, having a heat recovery system (12) which has at least one particularly combustible working medium and a working medium circuit (13) with at least one evaporator (14; 14a), a pump (15) and at least one expansion machine (16), wherein the evaporator (14; 14a) is arranged in an exhaust gas path (2) of the internal combustion engine (1), for carrying out the method according to one of the claims 1 to 7, **characterised in that** at least one NH₃ sensor (20; 20a) is arranged downstream of at least one evaporator (14; 14a) arranged in the exhaust gas flow path (2), and the exhaust gas can be measured in the exhaust gas flow path (2) of the internal combustion engine (1) with said NH₃ sensor (20; 20a), wherein the NH₃ sensor (20; 20a) is connected to an electronic control and/or evaluation unit (21).

9. An internal combustion engine (1) according to claim 8, **characterised in that** a first evaporator (14) is arranged downstream of an SCR catalytic converter (8) in an exhaust gas line (3) of the internal combustion engine (1) forming the exhaust gas flow path (2), wherein a first NH₃ sensor (20) is arranged downstream of the first evaporator (14) in the exhaust gas line (3), and wherein preferably a barrier catalyst (9) for NH₃ is arranged between the SCR catalytic converter (8) and the first evaporator (14).

10. An internal combustion engine (1) according to claim 9, **characterised in that** the first evaporator (14) can be bypassed by a bypass line (18) which branches off from the exhaust gas line (3) upstream of the first evaporator (14) and enters the exhaust gas line (3) again downstream of the first evaporator (14), wherein preferably the first NH₃ sensor (20) is arranged downstream of the orifice of the bypass line (18) into the exhaust gas line (3).

11. An internal combustion engine (1) according to one of claims 8 to 10, **characterised in that** a second evaporator (14a) is arranged in an exhaust gas return line (4) of the internal combustion engine (1) forming the exhaust gas flow path (2), wherein preferably a second NH₃ sensor (20a) is arranged downstream of the second evaporator (14a) in the exhaust gas return line (4).

## Revendications

1. Procédé permettant d'identifier un défaut d'étanchéité dans un système de récupération de chaleur (12) du moteur à combustion interne (1) d'un véhicule automobile, selon lequel le système de récupération de chaleur (12, 12a) renferme au moins un fluide de travail, en particulier combustible et comporte un circuit de fluide de travail (13, 13a) ayant au moins un évaporateur (14, 14a), une pompe (15, 15a) et au moins une machine de détente (16, 16a), l'évaporateur (14, 14a) étant parcouru par des gaz d'échappement du moteur à combustion interne (1),
**caractérisé en ce qu'**
au moins un détecteur de NH₃ (20, 20a) est monté dans le trajet de circulation des gaz d'échappement (2) en aval de l'évaporateur (14, 14a), et ce détecteur de NH₃ (20, 20a) mesure les gaz d'échappement dans leur trajet de circulation (2), et, en présence d'au moins une valeur de mesure de NH₃ anormalement élevée, - de préférence après mise en oeuvre d'un contrôle de vraisemblance -, on conclut à un défaut d'étanchéité de l'évaporateur (14, 14a), en tant que fluide de travail, une substance chimique étant sélectionnée, ou, au fluide de travail étant associée une substance chimique sur laquelle réagit le capteur de NH₃ (20, 20a).

2. Procédé conforme à la revendication 1,
**caractérisé en ce que**
le détecteur de NH₃ (20, 20a) présente une sensibilité croisée à la substance chimique.

3. Procédé conforme à la revendication 1 ou 2,
**caractérisé en ce qu'**
en présence d'une valeur de mesure de NH₃ anormalement élevée, lors du fonctionnement du moteur à combustion interne (1) on effectue un contrôle de vraisemblance en réduisant ou en annulant la quantité injectée d'un additif renfermant du NH₃ en amont du catalyseur accumulateur SCR (8), de préférence en utilisant une boucle de régulation fermée, et on recherche si, après écoulement d'une première durée d'attente définie, une diminution importante de la concentration en NH₃ mesurée a eu lieu, et si en outre, une valeur de mesure de NH₃ anormalement élevée est déterminée, on conclut à un défaut d'étanchéité de l'évaporateur (14).

4. Procédé conforme à l'une des revendications 1 à 3,
**caractérisé en ce qu'**
en mode de poussée du moteur à combustion interne (1) l'injection d'un additif renfermant du NH₃ en amont du catalyseur accumulateur SCR (8) est réduite ou arrêtée et on recherche si, après écoulement d'une seconde durée d'attente définie, une diminution importante de la concentration en NH₃ mesurée s'est produite, et si en outre une valeur de mesure de NH₃ anormalement élevée est déterminée, on conclut à un défaut d'étanchéité de l'évaporateur (14).

5. Procédé conforme à l'une des revendications 1 à 4,
**caractérisé en ce que**
l'on détermine une valeur de mesure de NH₃ anormalement élevée si la valeur moyenne de NH₃ est supérieure à 10 ppm.

6. Procédé conforme à l'une des revendications 1 à 5,
**caractérisé en ce que**
la première et/ou la seconde durée d'attente est égale à au moins 30 à 60 secondes.

7. Procédé conforme à l'une des revendications 1 à 6,
**caractérisé en ce que**
lorsqu'un défaut d'étanchéité de l'évaporateur (14, 14a) a été déterminé, un signal d'alarme correspondant est délivré.

8. Moteur à combustion interne comprenant un système de récupération de chaleur (12) qui renferme au moins un fluide de travail, en particulier combustible et comporte un circuit de fluide de travail (13) ayant au moins un évaporateur (14, 14a), une pompe (15) et au moins une machine de détente (16), l'évaporateur (14, 14a) étant monté dans le trajet de circulation des gaz d'échappement (2) du moteur à combustion interne (1), permettant la mise en oeuvre du procédé conforme à l'une des revendications 1 à 7,
**caractérisé en ce qu'**
au moins un détecteur de NH₃ (20, 20a) est monté en aval d'au moins un compresseur (14, 14a) monté dans le trajet de circulation des gaz d'échappement (2), et ce détecteur de NH₃ (20, 20a) permet de mesurer les gaz d'échappement dans le trajet de circulation (2) des gaz d'échappement du véhicule, le détecteur de NH₃ (20, 20a) étant relié à une unité de commande et/ou d'exploitation électronique (21).

9. Moteur à combustion interne (1) conforme à la revendication 8,
**caractérisé en ce qu'**
un premier évaporateur (14) est monté dans une ligne de gaz d'échappement (3) du moteur à combustion interne (1) formant le trajet de circulation (2) des gaz d'échappement en aval d'un catalyseur SCR (8), un premier détecteur de NH₃ (20) est monté en aval du premier évaporateur (14) dans la ligne des gaz d'échappement (3), et de préférence, entre le catalyseur SCR (8) et le premier évaporateur (14) est monté un catalyseur de blocage (9) du NH₃.

10. Moteur à combustion interne (1) conforme à la revendication 9,
**caractérisé en ce que**
le premier évaporateur (14) peut être contourné par une conduite de contournement (18) qui bifurque de la ligne des gaz d'échappement (3) en amont du premier évaporateur (14) et débouche à nouveau dans la ligne des gaz d'échappement (3) en aval du premier évaporateur (14), et de préférence le premier détecteur de NH₃ (20) est monté en aval de l'embouchure de la conduite de contournement (18) dans la ligne des gaz d'échappement (3).

11. Moteur à combustion interne (1) conforme à l'une des revendications 8 à 10,
**caractérisé en ce qu'**
un second évaporateur (14a) est monté dans une conduite de retour des gaz d'échappement (4) du moteur à combustion interne formant le trajet de circulation des gaz d'échappement (2), et de préférence, un second détecteur de NH₃ (20a) est monté dans la conduite de retour des gaz d'échappement (4) en aval du second évaporateur (14a).
